# EUROPEAN PATENT SPECIFICATION

(11) **EP 2 991 197 B1**
(45) Date of publication and mention of the grant of the patent: **15.11.2017**
(21) Application number: 15182728.4
(22) Date of filing: 27.08.2015
(51) Int. Cl.: H02K 1/27, H02K 15/03

(54) **SALIENT PERMANENT MAGNET MOTOR, MANUFACTURING METHOD THEREOF AND ELECTRIC VEHICLE COMPRISING THE MOTOR**
AUSGEPRÄGTER PERMANENTMAGNETMOTOR, HERSTELLUNGSVERFAHREN DAFÜR UND ELEKTROFAHRZEUG MIT DEM MOTOR
MOTEUR À AIMANTS PERMANENTS À PÔLES SAILLANTS, SON PROCÉDÉ DE FABRICATION ET VÉHICULE ÉLECTRIQUE COMPRENANT LE MOTEUR

(30) Priority: 29.08.2014 CN 201420497048 U
(43) Date of publication of application: 02.03.2016
(73) Proprietor: Bosch Automotive Products (Suzhou) Co., Ltd., Jiangsu 215021 (CN); Bosch Automotive Products (Changsha) Co., Ltd., Changsha Hunan 410100 (CN)
(72) Inventor: Cao, Yanfei, 215021 Suzhou (CN); Zhu, Xiangqian, 215021 Suzhou (CN); Albrecht, Michael, 215021 Suzhou (CN); Bechle, Andreas, 200335 Changning District (CN); Pan, Jiaye, 200335 Changning District (CN); He, Yongshun, 215021 Suzhou (CN)
(74) Representative: Donath, Petra

(56) References cited:
- WO-A1-2011/076740
- DE-A1-102009 054 584
- DE-A1-102012 215 906
- US-A1- 2003 132 681

## Description

### Technical Field

The disclosure relates to a salient permanent magnet motor, a method for manufacturing such a motor and an electric vehicle comprising such a motor.

### Background Art

Electrical BLDC or PMSM motors with salient permanent magnets are well known. Usually, such a motor comprises an inner or outer rotor lamination, and the magnets are placed in pockets in the rotor lamination which enables easy assembly but bears the negative effect of magnet flux being short-circuited by the lamination material surrounding the magnets. As a result, magnet flux cannot be fully utilized.

Rotor saliency allows exploitation of additional reluctance torque. Possible rotor salient magnet assembling methods comprise clamping, form-fitting, gluing, etc. Gluing rotor salient magnets may avoid designing specific structure in the rotor, but a portion of the glue may be extruded during assembling the magnets in an axial direction and thus this portion of the glue needs to be scraped off.

In the prior art the following patent documents disclose technological background for the present invention: DE 10 2012 215 906 A1, DE 10 2009 05 45 84, WO 2011/076740 and US 2003/13 26 81 A1.

### Summary of the Invention

An object of the disclosure is to provide a salient permanent magnet motor and a manufacturing method thereof for avoiding at least some of the defects mentioned above. In particular, it is an object of the present invention to provide a salient permanent magnetic motor and a method for manufacturing same with improved characteristics regarding the glue application. This object is solved by a salient permanent magnetic motor according to claim 1 and a method for manufacturing such a motor according to claim 6. Further advantageous embodiments and improvements of the present invention are listed in the dependent claims. Aspects of the inventive solution are listed below before the invention will be discussed with reference to its advantageous embodiments.

For this end, according to an aspect of the disclosure, there provides a salient permanent magnet motor which comprises a stator and a rotor rotatable with respect to the stator, the rotor comprising:
a rotor ring formed with one or more circumferential grooves in its inner periphery;
pole shoes fixed to the inner periphery of the rotor ring and disposed to be separated from one another in a circumferential direction, with receiving spaces formed between neighboring pole shoes; and
permanent magnets arranged in the receiving spaces respectively and also fixed to the inner periphery of the rotor ring;
wherein the pole shoes and the permanent magnets are fixed to the inner periphery of the rotor ring by a glue which is originally dispensed in the one or more circumferential grooves in the rotor ring and then flows under capillary forces into a glue gap formed between an outer periphery defined by the pole shoes and the permanent magnets and the inner periphery of the rotor ring.

In a possible embodiment of the motor, the rotor ring comprises a first end in an axial direction through which the pole shoes and the permanent magnets are inserted into the rotor ring, and a second opposite end having a circular protrusion for positioning the pole shoes and the permanent magnets in the axial direction.

In a possible embodiment of the motor, the rotor ring is formed in its inner periphery near the second end with a circumferential buffer groove for receiving air and excess glue.

In a possible embodiment of the motor, the rotor ring comprises positioning and holding means for positioning and holding the pole shoes with respect to the rotor ring.

In a possible embodiment of the motor, the pole shoes comprise retention means for holding the permanent magnets in the receiving spaces.

The disclosure in another aspect provides a method for manufacturing a salient permanent magnet motor comprising the steps of:
1) preparing a rotor ring, a plurality of pole shoes and a plurality of permanent magnets, the rotor ring being formed with one or more circumferential grooves in its inner periphery;
2) dispensing a glue into the one or more circumferential grooves;
3) arranging the pole shoes and the permanent magnets near the inner periphery of the rotor ring, with the pole shoes being separated from one another in a circumferential direction, and receiving spaces being formed between neighboring pole shoes in which the permanent magnets are arranged;
4) causing the glue, under capillary forces, to leave the one or more circumferential grooves and to flow into a glue gap formed between an outer periphery defined by the pole shoes and the permanent magnets and the inner periphery of the rotor ring;
5) curing the glue.

In a possible embodiment of the method, in step 3), a fixture is used for holding the pole shoes and the permanent magnets as a substantial continuous cylinder, the fixture being removed after step 5).

In a possible embodiment of the method, the fixture comprises assistant positioning means for positioning the pole shoes with respect to the rotor ring.

In a possible embodiment of the method, in step 4), the glue is heated to a temperature under which the viscosity of the glue is reduced so that the glue flows into the glue gap.

In a possible embodiment of the method, in step 5), the glue is further heated to the curing temperature of the glue.

The application of the disclosure can be extended to an electric vehicle, especially a light electric vehicle, such as an escooter, an ebike, an electric 3-wheeler, an electric 4-wheeler, etc., comprising a salient permanent magnet motor described above.

In a possible embodiment of the electric vehicle, the rotor ring forms a rim of a driving wheel of the electric vehicle.

According to the disclosure, a salient permanent magnet motor can be manufactured in a simple and reliable way. No glue is extruded out and thus no scraping step is needed.

Further, in the motor according to the disclosure, short circuit path can be prevented and thus flux loss is avoided.

Further, the motor according to the disclosure has a higher output torque as a consequence of more flux and a larger operation speed range as a result of the rotor saliency.

### Brief Description of the Drawings

Figure 1 is a schematic front view of a salient permanent magnet motor according to a possible embodiment of the disclosure, with some components being removed for clarity;
Figure 2 is a side view of a pole shoe used in the motor of Figure 1;
Figure 3 is a front view of the pole shoe of Figure 2;
Figure 4 is a sectional view of a rotor ring of the motor of Figure 1;
Figure 5 is a sectional view of a fixture that may be used for manufacturing the motor of Figure 1; and
Figures 6 to 10 are sectional views showing the steps for manufacturing the motor of Figure 1.

### Detailed Description of Preferred Embodiments

Now some preferred embodiments of the disclosure will be described with reference to the drawings.

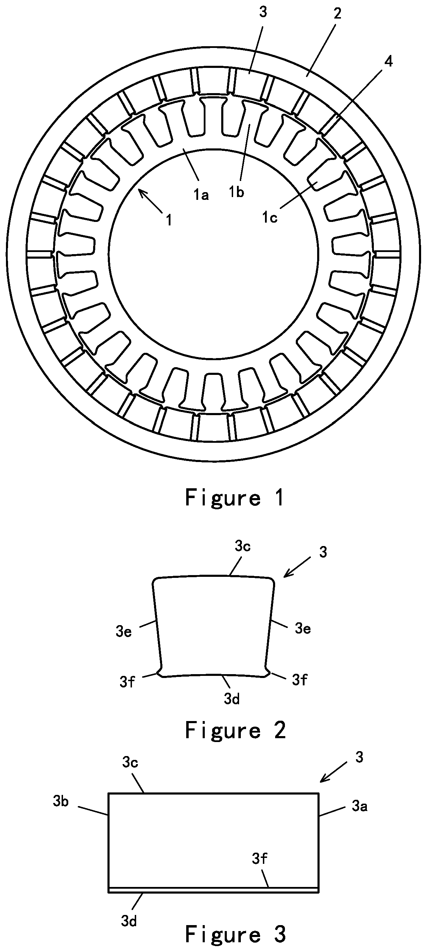

According to a possible embodiment of the disclosure, there provides a salient permanent magnet motor as shown in Figure 1. The salient permanent magnet motor mainly comprises a stator and a rotor. The stator and the rotor share the same central axis which is also the central axis of the motor.

In the illustrated embodiment, the stator comprises a stator lamination 1 mounted to a bracket (not shown). The stator lamination 1 is formed by stacking a set of profiled sheet metal plates and comprises a stator ring 1a and stator teeth 1b extending radially outwards from the stator ring 1a and disposed preferably equidistantly from one another in a circumferential direction, each stator tooth 1b having a coil (not shown) wound onto it. Slots 1c are formed between the respective stator teeth 1b for accommodating the coil.

The rotor mainly comprises a rotor ring 2 formed of a magnetic nonconductive material, such as aluminum, and surrounding the stator, a plurality of pole shoes 3 fixedly attached to an radially inner periphery of the rotor ring 2 and disposed preferably equidistantly from one another in the circumferential direction, and a plurality of permanent magnets 4, each arranged in a receiving space formed between a corresponding pair of neighboring pole shoes 3, also fixedly attached to the radially inner periphery of the rotor ring 2.

The slots 1c and the pole shoes 3 have different numbers, and the slot-pole topology is selected according to specific application.

As shown in Figures 2 and 3, each pole shoe 3 is formed of a magnetic conductive material (lamination sheet, soft magnetic compound, powder metal and the like). For example, the pole shoe 3 is formed by stacking a multitude of lamination sheets. The pole shoe 3, when attached to the rotor ring 2, extends from a front surface 3a to a back surface 3b in a longitudinal direction parallel to the central axis of the motor. The pole shoe 3 has an outer surface 3c, an inner surface 3d and opposite side surfaces 3e connected between the outer and inner surfaces 3c and 3d.

The outer surface 3c has a profile following the inner periphery of the rotor ring 2 so that the pole shoe 3 can be tightly fixed to the rotor ring 2. The circumferential distance between the side surfaces 3e of each pole shoe 3 is decreased as approaching the inner surface 3d in a way that the circumferential distance between facing side surfaces 3e of neighboring pole shoes 3 is substantially constant at different radial locations. Thus, each permanent magnet 4 having a substantially rectangular shape with a thickness in the circumferential direction can be held closely in a corresponding receiving space.

A circumferentially outward protrusion 3f is formed along the edge between each side surface 3e and the inner surface 3d. The opposing protrusions 3f of each pair of neighboring pole shoes 3 form retention means for holding a corresponding magnet 4 in the receiving space formed between the pair of neighboring pole shoes 3.

It is appreciated that the retention means may be of other form only if it can held the magnet 4 in the receiving space to prevent the magnet 4 from moving toward the stator. In addition, the retention means is not always necessary. In the case that no retention means is provided, the magnets 4 need to be fixed to the pole shoes 3, such as by form-fitting, gluing, frictional force, etc.

When fixedly to the rotor ring 2, the pole shoes 3 and the magnets 4 form a continuous cylinder facing towards the stator teeth 1b with a small air gap, as shown in Figure 1.

According to the disclosure, the pole shoes 3 and the magnets 4 are fixed to the rotor ring 2 by a gluing-based assembling process. The gluing-based assembling process is a portion of the motor manufacturing method of the disclosure.

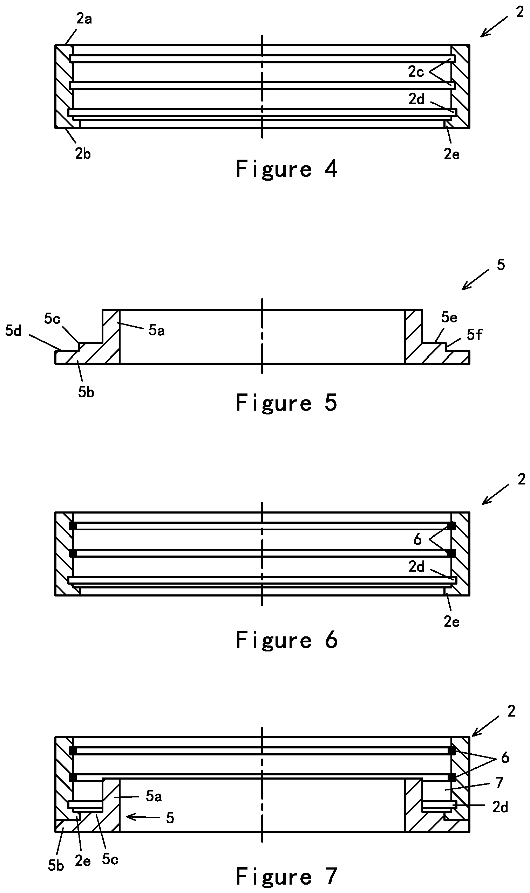

As shown in Figure 4, the rotor ring 2 is adapted to this gluing-based assembling process. Specifically, the rotor ring 2 defines an inner diameter which is slightly larger than the outer diameter of the continuous cylinder of the pole shoes 3 and the magnets 4, so that a glue gap is formed between the inner periphery of the rotor ring 2 and the outer periphery of the continuous cylinder of the pole shoes 3 and the magnets 4.

Further, the rotor ring 2 has a first end face 2a, which is oriented as an upper end during the gluing-based assembling process, and a second end face 2b, which is oriented as a bottom end during the assembling process. Further, the rotor ring 2 is formed with one or more circumferential grooves 2c in its inner periphery. The number of the circumferential groove(s) 2c depends on the axial length of the rotor. For a short rotor, only one circumferential groove 2c is enough, while a long rotor requires two or more circumferential grooves 2c separated from each other in the axial direction.

Further, near the second end face 2b, the rotor ring 2 is formed with a circumferential buffer groove 2d.

Further, the rotor ring 2 comprises an inward circular protrusion 2e at its second end face 2b.

According to the disclosure, an optional fixture 5 is specifically designed for positioning and holding the pole shoes 3 and the magnets 4 in the assembling process, as shown in Figure 5. The fixture 5 comprises a tubular body 5a, a flange 5b extending radially outwards from a bottom end of the tubular body 5a, and a circular step 5c formed integrally between an outer periphery of the tubular body 5a and a front face 5d of the flange 5b.

The fixture 5 may comprise assistant positioning means for assisting the positioning and holding the pole shoes 3 and the magnets 4. In a possible embodiments, each pole shoe has a locating hole (not shown) formed in the longitudinal direction through the pole shoe 3, and the fixture 5 comprises a plurality of locating pins (not shown) fixed to the circular step 5c, extending axially from the circular step 5c and disposed in the circumferential direction, preferably equidistantly from one another.

The locating pins are configured to be inserted into the locating holes of the pole shoes 3, so that the pole shoes 3 together with the magnets 4 held between them form the continuous cylinder described above.

The circular step 5c defines an axially front end face 5e and a radially outer periphery 5f, with the axial distance between the front end face 5e and the front face 5d of the flange 5b being equal to the axial height of the inward circular protrusion 2e of the rotor ring 2, and the outer diameter of the radially outer periphery 5f being equal to the inner diameter of the inward circular protrusion 2e.

Further, the outer diameter of the tubular body 5a is set to be equal to the inner diameter of the continuous cylinder of the pole shoes 3 and the magnets 4, and the axial height of the tubular body 5a is designed for stably locating and holding the pole shoes 3.

For assembling the pole shoes 3 and the magnets 4 to the rotor ring 2, first, as shown in Figure 6, a glue 6 of a suitable type is dispensed into the circumferential groove(s) 2c of the rotor ring 2. The glue 6 is protruded inwardly out of the inner periphery of the rotor ring 2 to some extent.

Then, as shown in Figure 7, the fixture 5 (if any) is put in an orientation that the flange 5b is located at bottom, and the rotor ring 2 is assembled to the fixture 5, with the tubular body 5a of the fixture 5 being inserted into the rotor ring 2, the circular step 5c of the fixture 5 being fitted in the inward circular protrusion 2e of rotor ring 2, and the second end face of rotor ring 2 abutting against the front face of the fixture 5. A circular slot 7 is defined between the tubular body 5a and the rotor ring 2.

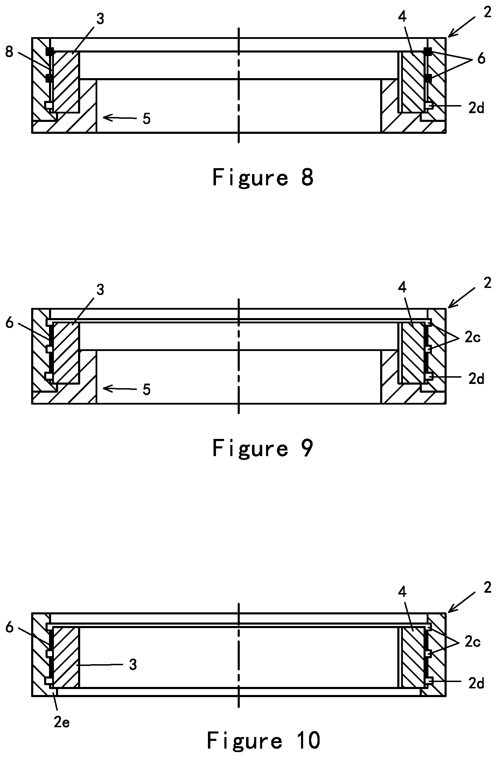

Then, as shown in Figure 8, the pole shoes 3 are inserted partly into circular slot 7 mentioned above (possibly by inserting the locating pins of the fixture 5 into the locating holes of the pole shoes 3) and the magnets 4 are arranged between the pole shoes 3 to form the continuous cylinder of them. The continuous cylinder is supported at its bottom end by the circular step 5c of the fixture 5 and the inward circular protrusion 2e of rotor ring 2 which are substantially flush with each other, and is limited at its inner periphery by the tubular body 5a of the fixture 5. It is appreciated that the assistant positioning means is not always necessary. In addition, other assistant positioning means, rather than the locating pins and the locating holes, may be used for assisting the positioning of the pole shoes 3.

The glue gap formed between the inner periphery of the rotor ring 2 and the outer periphery of the continuous cylinder is designated by reference numeral 8 in Figure 8. It is appreciated that, the glue gap 8 is amplified for clearly shown, but it is very small in real application.

Then, as shown in Figure 9, the glue leaves the circumferential groove(s) 2c and flows into the glue gap 8 by capillary forces (and possible by gravity). It is appreciated that the radial width of the glue gap 8 is optimized for forming such capillary forces. The circumferential buffer groove 2d in the rotor ring 2 may absorb air and excess glue. It is also appreciated that, for some particular glues used here, the assembly formed in the step shown in Figure 8 shall be heated up to a temperature under which the viscosity of the glue is reduced so that the glues may flow into the glue gap 8, while for some other glues, they may be assisted to flow into the glue gap 8 by other means without being heated.

Then, the glue is cured, for example, at ambient temperature.

For particular glues used here, the assembly is further heated up to the curing temperature of the glue, and thus the glue is cured. Then, the assembly is cooled down to a safe temperature for handling.

Then, as shown in Figure 10, the fixture 5 is removed, leaving the rotor ring 2 and the pole shoes 3 and the magnets 4 fixed to it by the cured glue.

It is appreciated that the fixture 5 is designed for positioning and holding the pole shoes 3 and the magnets 4 with respect to the rotor ring 2. The fixture 5 can be omitted if there is other positioning and holding means for the pole shoes 3. For example, form-fitting structures (not shown) may be formed between the rotor ring 2 and the pole shoes 3 for positioning and holding the pole shoes 3 as well as the magnets 4 to the rotor ring 2. In this condition, the fixture 5 is not necessary, and the features described above for the gluing-based assembling process, except that related with the fixture 5, are also applicable in the embodiments without a fixture.

By using the gluing-based assembling process, a rotor shown in Figure 1 can be manufactured in a simple and reliable way. No glue is extruded out since it flows into the glue gap by capillary forces, and thus no scraping step is needed.

It is appreciated that, in some cases, the rotor ring forms directly a motor housing of an outer rotor type motor. In this condition, the process of the disclosure could be used to glue the pole shoes into the motor housing.

Further, in the motor manufacture according to the disclosure, the magnets are tangentially (in the circumferential direction) placed between separate pole shoes which have no connection to each other, so short circuit path can be prevented. In this way, flux loss through connecting bridges is avoided and therefore motor performance can be enhanced.

Further, in the gluing-based assembling process of the disclosure, individual pole shoes and also the magnets are glued to the inner periphery of the rotor ring, which simplifies the production procedure. In addition, the assembling tolerances regarding the roundness of the cylinder of the pole shoes and the magnets can be partially absorbed by the glue gap.

It is appreciated that the gluing-based assembling process of the disclosure is applicable in both outer and inner motor rotor, and thus the salient permanent magnet motor may be either an outer runner motor or an inner runner motor.

The disclosure in another aspect relates to electric vehicles. Outer rotor direct drive electronically commutated motors are known for powering electric vehicles. In this industry, the rotor is directly connected to the rim and thus is part of the vehicle's driving wheel. In this field, the magnets are generally placed on the inner surface of a steel rotor ring which allows for no or only little saliency.

Thus, according to a further embodiment of the disclosure, the salient permanent magnet motor described above is applied to electric vehicles, especially light electric vehicles, such as escooters, ebikes, electric 3-wheelers, electric 4-wheelers, etc., in which the rotor ring of an outer rotor forms a rim of a driving wheel of an electric vehicle. In this way, the salient rotor design not only allows exploitation of additional reluctance torque in a vehicle motor which leads to higher output torque but also supports a field-weakening motor control scheme which - with using related control strategy - extends the operation speed range of the motor at a given voltage.

While certain embodiments have been described, these embodiments have been presented by way of example only, and are not intended to limit the scope of the disclosure, which is defined in the appended claims.

## Claims

1. A permanent magnet motor comprising a stator (1, 1a-1c) and a rotor (2, 2a-2e) rotatable with respect to the stator (1, 1a-1c), the rotor (2, 2a-2e) comprising:
a) a rotor ring (2, 2a-2e) formed with one or more circumferential grooves (2c) in its inner periphery;
b) pole shoes (3, 3a-3f) fixed to the inner periphery of the rotor ring (2, 2a-2e) and disposed to be separated from one another in a circumferential direction, with receiving spaces formed between neighboring pole shoes (3, 3a-3f); and
c) permanent magnets (4) arranged in the receiving spaces respectively and also fixed to the inner periphery of the rotor ring (2, 2a-2e);
d) wherein the pole shoes (3, 3a-3f) and the permanent magnets (4) are fixed to the inner periphery of the rotor ring (2, 2a-2e) by a glue which is originally dispensed in the one or more circumferential grooves (2c) in the rotor ring (2, 2a-2e) and then flows under capillary forces into a glue gap (8) formed between an outer periphery defined by the pole shoes (3, 3a-3f) and the permanent magnets (4) and the inner periphery of the rotor ring (2, 2a-2e).

2. The permanent magnet motor of claim 1, wherein the rotor ring (2, 2a-2e) comprises a first end (2a) in an axial direction through which the pole shoes (3, 3a-3f) and the permanent magnets (4) are inserted into the rotor ring (2, 2a-2e), and a second opposite end (2b) having a circular protrusion (2e) for positioning the pole shoes (3, 3a-3f) and the permanent magnets (4) in the axial direction.

3. The permanent magnet motor of claim 2, wherein the rotor ring (2, 2a-2e) is formed in its inner periphery near the second end (2b) with a circumferential buffer groove (2d) for receiving air and excess glue.

4. The permanent magnet motor of any one of claims 1 to 3, wherein the rotor ring (2, 2a-2e) comprises positioning and holding means (5, 5a-5f) for positioning and holding the pole shoes (3, 3a-3f) with respect to the rotor ring (2, 2a-2e).

5. The permanent magnet motor of any one of claims 1 to 4, wherein the pole shoes (3, 3a-3f) comprise retention means (3f) for holding the permanent magnets (4) in the receiving spaces.

6. A method for manufacturing a permanent magnet motor comprising the steps of:
a) preparing a rotor ring (2, 2a-2e), a plurality of pole shoes (3, 3a-3f) and a plurality of permanent magnets (4), the rotor ring (2, 2a-2e) being formed with one or more circumferential grooves (2c) in its inner periphery;
b) dispensing a glue into the one or more circumferential grooves (2c);
c) arranging the pole shoes (3, 3a-3f) and the permanent magnets (4) near the inner periphery of the rotor ring (2, 2a-2e), with the pole shoes (3, 3a-3f) being separated from one another in a circumferential direction, and receiving spaces being formed between neighboring pole shoes (3, 3a-3f) in which the permanent magnets (4) are arranged;
d) causing the glue, under capillary forces, to leave the one or more circumferential grooves (2c) and to flow into a glue gap (8) formed between an outer periphery defined by the pole shoes (3, 3a-3f) and the permanent magnets (4) and the inner periphery of the rotor ring (2, 2a-2e); and
e) curing the glue.

7. The method of claim 6, wherein in step c), a fixture (5, 5a-5f) is used for holding the pole shoes (3, 3a-3f) and the permanent magnets (4) as a substantial continuous cylinder, the fixture (5, 5a-5f) being removed after step e).

8. The method of claim 7, wherein the fixture (5, 5a-5f) comprises assistant positioning means for positioning the pole shoes (3, 3a-3f) with respect to the rotor ring (2, 2a-2e).

9. The method of any one of claims 6 to 8, wherein in step d), the glue is heated to a temperature under which the viscosity of the glue is reduced so that the glue flows into the glue gap (8).

10. The method of claim 9, wherein in step e), the glue is further heated to the curing temperature of the glue.

11. An electric vehicle comprising a permanent magnet motor of any one of claims 1 to 5.

12. The electric vehicle of claim 11, wherein the rotor ring (2, 2a-2e) forms a rim of a driving wheel of the electric vehicle.

## Patentansprüche

1. Permanentmagnetmotor, umfassend einen Stator (1, 1a-1c) und einen Rotor (2, 2a-2e), der in Bezug auf den Stator (1, 1a-1c) drehbar ist, wobei der Rotor (2, 2a-2e) umfasst:
a) einen Rotorring (2, 2a-2e), der mit einer oder mehreren umlaufenden Nuten (2c) in seinem Innenumfang gebildet ist;
b) Polschuhe (3, 3a-3f), die an dem Innenumfang des Rotorrings (2, 2a-2e) befestigt sind und angeordnet sind, um in einer Umlaufrichtung voneinander getrennt zu werden, mit Aufnahmeräumen, die zwischen benachbarten Polschuhen (3, 3a-3f) gebildet sind; und
c) Permanentmagnete (4), die in den jeweiligen Aufnahmeräumen angeordnet und auch an dem Innenumfang des Rotorrings (2, 2a-2e) befestigt sind;
d) wobei die Polschuhe (3, 3a-3f) und die Permanentmagnete (4) an dem Innenumfang des Rotorrings (2, 2a-2e) mittels eines Klebers befestigt sind, der ursprünglich in die eine oder mehreren umlaufende(n) Nut(en) (2c) in dem Rotorring (2, 2a-2e) abgegeben wurde und dann mithilfe der Kapillarkräfte in einen Kleberspalt (8) fließt, der zwischen einem Außenumfang, der durch die Polschuhe (3, 3a-3f) und die Permanentmagnete (4) definiert ist, und dem Innenumfang des Rotorrings (2, 2a-2e) gebildet ist.

2. Permanentmagnetmotor nach Anspruch 1, wobei der Rotorring (2, 2a-2e) ein erstes Ende (2a) in einer axialen Richtung, durch das die Polschuhe (3, 3a-3f) und die Permanentmagnete (4) in den Rotorring (2, 2a-2e) eingesetzt werden, und ein zweites gegenüberliegendes Ende (2b) mit einem kreisförmigen Vorsprung (2e) umfasst, um die Polschuhe (3, 3a-3f) und die Permanentmagnete (4) in der axialen Richtung zu positionieren.

3. Permanentmagnetmotor nach Anspruch 2, wobei der Rotorring (2, 2a-2e) in seinem Innenumfang nahe dem zweiten Ende (2b) mit einer umlaufenden Puffernut (2d) gebildet ist, um Luft und überschüssigen Kleber aufzunehmen.

4. Permanentmagnetmotor nach einem der Ansprüche 1 bis 3, wobei der Rotorring (2, 2a-2e) Positionierungs- und Haltemittel (5, 5a-5f) zum Positionieren und Halten der Polschuhe (3, 3a-3f) in Bezug auf den Rotorring (2, 2a-2e) umfasst.

5. Permanentmagnetmotor nach einem der Ansprüche 1 bis 4, wobei die Polschuhe (3, 3a-3f) Rückhaltemittel (3f) umfassen, um die Permanentmagnete (4) in den Aufnahmeräumen zu halten.

6. Verfahren zum Fertigen eines Permanentmagnetmotors, umfassend die Schritte:
a) Herstellen eines Rotorrings (2, 2a-2e), einer Vielzahl von Polschuhen (3, 3a-3f) und einer Vielzahl von Permanentmagneten (4), wobei der Rotorring (2, 2a-2e) mit einer oder mehreren umlaufenden Nuten (2c) in seinem Innenumfang gebildet ist;
b) Abgeben eines Klebers in die eine oder mehreren umlaufende (n) Nut(en) (2c);
c) Anordnen der Polschuhe (3, 3a-3f) und der Permanentmagnete (4) in der Nähe des Innenumfangs des Rotorrings (2, 2a-2e), wobei die Polschuhe (3, 3a-3f) in Umlaufrichtung voneinander getrennt sind und Aufnahmeräume zwischen benachbarten Polschuhen (3, 3a-3f) gebildet sind, in denen die Permanentmagnete (4) angeordnet sind;
d) Herbeiführen, dass der Kleber die eine oder mehreren umlaufende(n) Nut(en) (2c) mithilfe von Kapillarkräften verlässt und in einen Kleberspalt (8) fließt, der zwischen einem Außenumfang, der durch die Polschuhe (3, 3a-3f) und die Permanentmagnete (4) definiert ist, und dem Innenumfang des Rotorrings (2, 2a-2e) gebildet ist; und
e) Härten des Klebers.

7. Verfahren nach Anspruch 6, wobei in Schritt c) eine Halterung (5, 5a-5f) zum Halten der Polschuhe (3, 3a-3f) und der Permanentmagnete (4) als substantieller kontinuierlicher Zylinder verwendet wird, wobei die Halterung (5, 5a-5f) nach Schritt e) entfernt wird.

8. Verfahren nach Anspruch 7, wobei die Halterung (5, 5a-5f) unterstützende Positionierungsmittel zum Positionieren der Polschuhe (3, 3a-3f) in Bezug auf den Rotorring (2, 2a-2e) umfasst.

9. Verfahren nach einem der Ansprüche 6 bis 8, wobei der Kleber in Schritt d) auf eine Temperatur erwärmt wird, bei der die Viskosität des Klebers reduziert wird, so dass der Kleber in den Kleberspalt (8) fließt.

10. Verfahren nach Anspruch 9, wobei der Kleber in Schritt e) des Weiteren bis auf die Härtungstemperatur des Klebers erwärmt wird.

11. Elektrofahrzeug, umfassend einen Permanentmagnetmotor nach einem der Ansprüche 1 bis 5.

12. Elektrofahrzeug nach Anspruch 11, wobei der Rotorring (2, 2a-2e) einen Felgenkranz eines Antriebsrades des Elektrofahrzeugs bildet.

## Revendications

1. Moteur à aimants permanents comprenant un stator (1, 1a-1c) et un rotor (2, 2a-2e) rotatif par rapport au stator (1, 1a-1c), le rotor (2, 2a-2e) comprenant:
a) un anneau de rotor (2, 2a-2e) comportant une ou plusieurs rainures(s) circonférentielle(s) (2c) dans sa périphérie intérieure;
b) des masses polaires (3, 3a-3f) fixées à la périphérie intérieure de l'anneau de rotor (2, 2a-2e) et disposées de manière à être séparées les unes des autres dans une direction circonférentielle, avec des espaces de réception formés entre des masses polaires voisines (3, 3a-3f); et
c) des aimants permanents (4) agencés dans les espaces de réception respectivement et également fixés à la périphérie intérieure de l'anneau de rotor (2, 2a-2e);
d) dans lequel les masses polaires (3, 3a-3f) et les aimants permanents (4) sont fixés à la périphérie intérieure de l'anneau de rotor (2, 2a-2e) par une colle qui est initialement versée dans lesdites une ou plusieurs rainure(s) circonférentielle(s) (2c) dans l'anneau de rotor (2, 2a-2e) et qui s'écoule ensuite sous l'action de forces capillaires dans un espace de colle (8) formé entre une périphérie extérieure définie par les masses polaires (3, 3a-3f) et les aimants permanents (4) et la périphérie intérieure de l'anneau de rotor (2, 2a-2e).

2. Moteur à aimants permanents selon la revendication 1, dans lequel l'anneau de rotor (2, 2a-2e) présente une première extrémité (2a) dans une direction axiale à travers laquelle les masses polaires (3, 3a-3f) et les aimants permanents (4) sont insérés dans l'anneau de rotor (2, 2a-2e), et une seconde extrémité opposée (2b) qui comporte une saillie circulaire (2e) servant à positionner les masses polaires (3, 3a-3f) et les aimants permanents (4) dans la direction axiale.

3. Moteur à aimants permanents selon la revendication 2, dans lequel l'anneau de rotor (2, 2a-2e) comporte dans sa périphérie intérieure à proximité de la seconde extrémité (2b) une rainure tampon circonférentielle (2d) destinée à recevoir de l'air et un excédent de colle.

4. Moteur à aimants permanents selon l'une quelconque des revendications 1 à 3, dans lequel l'anneau de rotor (2, 2a-2e) comprend des moyens de positionnement et de support (5, 5a-5f) pour positionner et maintenir les masses polaires (3, 3a-3f) par rapport à l'anneau de rotor (2, 2a-2e).

5. Moteur à aimants permanents selon l'une quelconque des revendications 1 à 4, dans lequel les masses polaires (3, 3a-3f) comprennent des moyens de retenue (3f) pour maintenir les aimants permanents (4) dans les espaces de réception.

6. Procédé de fabrication d'un moteur à aimants permanents, comprenant les étapes suivantes:
a) préparer un anneau de rotor (2, 2a-2e), une pluralité de masses polaires (3, 3a-3f) et une pluralité d'aimants permanents (4), l'anneau de rotor (2, 2a-2e) comportant une ou plusieurs rainure(s) circonférentielle(s) (2c) dans sa périphérie intérieure;
b) verser une colle dans lesdites une ou plusieurs rainure (s) circonférentielle(s) (2c);
c) agencer les masses polaires (3, 3a-3f) et les aimants permanents (4) à proximité de la périphérie intérieure de l'anneau de rotor (2, 2a-2e), avec les masses polaires (3, 3a-3f) séparées les unes des autres dans une direction circonférentielle, et des espaces de réception formés entre des masses polaires voisines (3, 3a-3f) dans lesquels les aimants permanents (4) sont agencés;
d) amener la colle, sous l'action de forces capillaires, à quitter lesdites une ou plusieurs rainure(s) circonférentielle (2c) et à s'écouler dans un espace de colle (8) formé entre une périphérie extérieure définie par les masses polaires (3, 3a-3f) et les aimants permanents (4) et la périphérie intérieure de l'anneau de rotor (2, 2a-2e); et
e) laisser durcir la colle.

7. Procédé selon la revendication 6, dans lequel à l'étape c), une garniture fixe (5, 5a-5f) est utilisée pour maintenir les masses polaires (3, 3a-3f) et les aimants permanents (4) comme un cylindre sensiblement continu, la garniture fixe (5, 5a-5f) étant enlevée après l'étape e).

8. Procédé selon la revendication 7, dans lequel la garniture fixe (5, 5a-5f) comprend des moyens d'aide au positionnement pour positionner les masses polaires (3, 3a-3f) par rapport à l'anneau de rotor (2, 2a-2e).

9. Procédé selon l'une quelconque des revendications 6 à 8, dans lequel à l'étape d), la colle est chauffée à une température en dessous de laquelle la viscosité de la colle est réduite de telle sorte que la colle s'écoule dans l'espace de colle (8).

10. Procédé selon la revendication 9, dans lequel à l'étape e), la colle est en outre chauffée à la température de durcissement de la colle.

11. Véhicule électrique comprenant un moteur à aimants permanents selon l'une quelconque des revendications 1 à 5.

12. Véhicule électrique selon la revendication 11, dans lequel l'anneau de rotor (2, 2a-2e) forme une jante d'une roue motrice du véhicule électrique.
